# FASCICULE DE BREVET EUROPEEN

(11) **EP 2 935 977 B1**
(45) Date de publication et mention de la délivrance du brevet: **26.08.2020**
(21) Numéro de dépôt: 13823963.7
(22) Date de dépôt: 20.12.2013
(51) Int. Cl.: F17C 11/00

(54) **RESERVOIR POUR LE STOCKAGE D'UN GAZ STOCKE PAR SORPTION COMPRENANT DES MOYENS D'ABSORPTION DE CHOCS**
TANK ZUR LAGERUNG EINES GESPEICHERTEN GASES DURCH SORPTION MIT EINEM STOSSABSORBIERENDEN MITTEL
TANK FOR STORING A GAS STORED BY SORPTION COMPRISING SHOCK-ABSORBING MEANS

(30) Priorité: 21.12.2012 FR 1262723
(43) Date de publication de la demande: 28.10.2015
(73) Titulaire: Plastic Omnium Advanced Innovation and Research, 1120 Brussels (BE)
(72) Inventeur: MADOUX, Dominique, B-7611 Rumes (BE); VAN SCHAFTINGEN, Jules-Joseph, B-1300 Wavre (BE); DOUGNIER, François, B-3190 Boortmeerbeek (BE)
(74) Mandataire: Remy, Vincent Noel Paul
(86) Numéro de dépôt international: PCT/FR2013/053213
(87) Numéro de publication internationale: WO 2014/096730

(56) Documents cités:
- EP-A2- 2 492 575
- WO-A1-2005/071306
- WO-A1-2012/070573
- US-A- 3 142 159
- US-B1- 6 530 233
- US-B1- 6 655 156

## Description

### DOMAINE DE L'INVENTION

L'invention concerne un réservoir pour le stockage d'un gaz.

Plus particulièrement, l'invention concerne un réservoir apte à être utilisé dans un système de dépollution ou de stockage d'énergie monté à bord d'un véhicule à moteur.

L'invention s'applique notamment, mais non exclusivement, au stockage d'ammoniac ou d'hydrogène. Plus généralement, l'invention s'applique à tout type de gaz pouvant être stocké par sorption sur un composé.

### ARRIERE PLAN TECHNOLOGIQUE

Dans la suite de ce document, on s'attache à décrire le cas particulier d'un réservoir pour le stockage d'ammoniac. L'ammoniac est, par exemple, destiné à être injecté dans la ligne d'échappement d'un véhicule pour réduire la quantité d'oxydes d'azote (NOx) dans les gaz d'échappement. Bien entendu, la présente invention s'applique à tout autre type de gaz, et notamment l'hydrogène.

Les oxydes d'azote présents dans les gaz d'échappement des véhicules, notamment Diesel, peuvent être éliminés par la technique de réduction catalytique sélective (généralement appelée SCR ou «Selective Catalytic Reduction»). Selon cette technique, des doses d'ammoniac (NH3) ou de précurseurs d'ammoniac sont injectées dans la ligne d'échappement en amont d'un catalyseur sur lequel les réactions de réduction ont lieu. Actuellement, l'ammoniac est produit par décomposition thermique d'un précurseur, généralement une solution aqueuse d'urée. Des systèmes embarqués de stockage, distribution et dosage d'une solution d'urée normalisée (telle que celle commercialisée sous la dénomination Adblue®, solution eutectique à 32.5% d'urée dans l'eau) ont ainsi été mis sur le marché.

Une autre technique consiste à stocker l'ammoniac par sorption sur un sel, le plus souvent un chlorure de métal alcalino-terreux. Généralement dans ce cas, le système de stockage comprend un réservoir comprenant une ou plusieurs alvéoles conçue(s) pour renfermer le sel.

Par « alvéole », on entend désigner une enceinte ou cavité délimitant au moins un volume interne servant de contenant au sel.

Le système de stockage comprend également un dispositif de chauffage configuré pour chauffer le sel contenu dans chaque alvéole. Ainsi, en chauffant le sel on libère l'ammoniac.

On connaît plusieurs types de réservoir pour le stockage d'ammoniac (ou également d'hydrogène) par sorption. Ces réservoirs connus utilisent généralement des alvéoles mono-matière, bi-matières, multi-matières ou composites.

Généralement, il est souhaitable que ces alvéoles aient une faible perméabilité à l'ammoniac (ou également à l'hydrogène), une excellente tenue à la pression et une bonne résistance à l'impact.

On cherche de plus en plus à réduire le poids du réservoir. Une solution pourrait consister à diminuer l'épaisseur des alvéoles. Or, en diminuant l'épaisseur de ces alvéoles on diminue la résistance à l'impact du réservoir. Le document US650233 divulgue un réservoir pour le stockage d'un gaz stocké par sorption sur un composé.

### OBJECTIFS DE L'INVENTION

Il est donc souhaitable de fournir un réservoir à faible poids et ayant une faible perméabilité, une bonne tenue à la pression et une bonne résistance aux chocs.

Il est aussi souhaitable de fournir un tel réservoir qui soit aisé à fabriquer, et pour un coût faible.

Il est également souhaitable de fournir un tel réservoir qui soit notamment bien adapté au stockage d'ammoniac ou d'hydrogène par sorption.

### EXPOSE DE L'INVENTION

Dans un mode de réalisation particulier de l'invention, il est proposé un réservoir pour le stockage d'un gaz selon la revendication 1.

Les alvéoles de l'invention sont notamment bien adaptées pour stocker un composé (aussi appelé matrice réactive), de préférence un solide, sur lequel un gaz (ammoniac, hydrogène,...) est fixé par sorption, de préférence par chimisorption. Dans le cas de l'ammoniac, il s'agit généralement d'un chlorure de métal alcalin, alcalino-terreux ou de transition. Il peut être à l'état pulvérulent ou sous forme d'agglomérats. Ce composé est de préférence un chlorure de métal alcalino-terreux, et de manière tout particulièrement préférée, un chlorure de Mg, Ba ou Sr. Pour le cas de l'hydrogène, ce composé peut être, par exemple, le Bore (B, Métalloïde), associé à d'autres éléments comme le magnésium (Mg), le lithium (Li), au sodium (Na) ou encore l'aluminium (Al). Des combinaisons avec le potassium (K), le nickel (Ni), ou le clore (Cl) peuvent également convenir.

Par exemple, les alvéoles de l'invention peuvent être des alvéoles mono-matière, bi-matières, multi-matières ou composites, métalliques, plastiques ou en combinaison.

Dans un mode de réalisation préférentiel, les alvéoles de l'invention sont mono-matière (par exemple, en plastique). Ainsi, l'idée est d'équiper une alvéole avec des moyens d'absorption de chocs, de manière à pouvoir diminuer l'épaisseur de l'alvéole tout en garantissant une bonne résistance à l'impact. En d'autres termes, les moyens d'absorption de chocs selon l'invention permettent de compenser la perte de résistance à l'impact due à la diminution de l'épaisseur de l'alvéole. En effet, les moyens d'absorption de chocs sont dimensionnés et montés sur et/ou à l'intérieur de l'alvéole de manière à lui offrir une interface de protection et d'amortissement efficace, notamment en cas d'impact ou de collision du réservoir.

En équipant les alvéoles avec des moyens d'absorption de chocs, l'épaisseur de ces alvéoles peut être diminuée. Par exemple, le réservoir de l'invention peut comprendre des alvéoles composites (par exemple en polyphtalamide chargé en fibres de verre). De préférence, et comme on le verra dans la suite de la description, les moyens d'absorption de chocs sont réalisés en un matériau à faible poids. Ainsi, le réservoir de l'invention bénéficie non seulement des avantages d'un réservoir classique (compatibilité chimique, faible perméabilité et bonne tenue à la pression), mais aussi il est plus léger (grâce à la diminution de l'épaisseur de son ou de ses alvéoles).

Les moyens d'absorption de chocs selon l'invention peuvent, par exemple, absorber l'énergie d'impact par déformation élastique voire plastique.

Les moyens d'absorption de chocs peuvent avoir une forme quelconque.

Dans un mode de réalisation particulier, les moyens d'absorption de chocs peuvent être des structures auxétiques bidimensionnelles, telles que par exemple des structures triangulaires, des structures trapézoïdales ou sinusoïdales. Dans ce mode de réalisation, les structures bidimensionnelles (formant les moyens d'absorption de chocs) peuvent, par exemple, être réparties en différents points de la surface externe de l'alvéole. Le schéma de répartition de ces structures bidimensionnelles peut, par exemple, être déterminé par simulation.

Dans un autre mode de réalisation particulier, les moyens d'absorption de chocs peuvent être des structures auxétiques tridimensionnelles, par exemple une structure bidimensionnelle enroulée sur une surface cylindrique. Par ailleurs, les structures auxétiques peuvent être continues ou non (comportant des trous).

Les structures auxétiques sont bien connues. De telles structures sont décrites, par exemple, dans les documents suivants : Choi, J. B. and Lakes, R. S., "Nonlinear properties of polymer cellular materials with a negative Poisson's ratio", J. Materials Science, 27, 4678-4684 (1992) ; Choi, J. B. and Lakes, R. S., "Nonlinear analysis of the Poisson's ratio of negative Poisson's ratio foams", J. Composite Materials, 29, (1),113-128, (1995). Dong, L, and Lakes, R. S., "Frequency dependence of Poisson's ratio of viscoelastic elastomer foam", Cellular Polymers, 30, 277-285, (2011); Greaves, G. N., Greer, A. L., Lakes, R. S., and Rouxel, T., "Poisson's Ratio and Modem Materials", Nature Materials, 10, 823-837 Nov. (2011).

Dans un autre mode de réalisation particulier, les moyens d'absorption de chocs peuvent se présenter sous la forme d'une enveloppe (ou couche) protectrice. L'enveloppe protectrice (formant les moyens d'absorption de chocs) peut être configurée pour recouvrir tout ou partie de l'alvéole. La forme et la taille de l'enveloppe protectrice sont de préférence adaptées pour pouvoir épouser la surface externe de l'alvéole. Dans un mode de réalisation particulier, l'enveloppe protectrice peut se présenter sous la forme d'un étui (chaussette, coque ou housse) élastique dans lequel on vient insérer l'alvéole ou les alvéoles.

Avantageusement, les moyens d'absorption de chocs sont en matière plastique. Les matières polymères thermoplastiques donnent de bons résultats dans le cadre de l'invention, notamment en raison des avantages de poids, de résistance mécanique et chimique et de mise en œuvre facilitée (ce qui permet d'obtenir des formes complexes).

En particulier, on peut utiliser des matériaux thermodurcissables, thermoplastiques ou élastomères.

Parmi les thermoplastiques, le polyéthylène et le polypropylène sont particulièrement intéressants.

Ces moyens d'absorption de choc en matière plastique peuvent adhérer (mécaniquement ou chimiquement par exemple) à la structure de l'alvéole ou ne pas y adhérer. L'adhésion permet d'augmenter encore la tenue à l'impact tout en assurant une meilleure étanchéité de l'ensemble.

D'excellents résultats ont été obtenus avec du polyéthylène. Par exemple, une enveloppe protectrice en polyéthylène et avec une épaisseur d'environ 2mm à 6mm convient bien pour une alvéole mono-matière (par exemple, de type métallique) d'épaisseur d'environ 0,2mm à 0,5mm.

Dans un autre mode de réalisation particulier, on peut utiliser un matériau en gel et en silicone.

Dans encore un autre mode de réalisation particulier, les moyens d'absorption de chocs peuvent être réalisés au moins en partie par une mousse de polyuréthane.

Dans encore un autre mode de réalisation particulier, les moyens d'absorption de chocs peuvent être réalisés à base de mousse d'aluminium.

Les moyens d'absorption de chocs sont montés sur l'alvéole par surmoulage. La fabrication du réservoir de l'invention par surmoulage est particulièrement avantageuse car elle est simple et économique. Le surmoulage permet aux moyens d'absorption de chocs d'être assemblés de manière totalement étanche sur la périphérie externe de l'alvéole. Par ailleurs, on peut équiper un groupe d'alvéoles avec des moyens d'absorption de chocs en mettant en œuvre une seule et même opération de surmoulage.

Avantageusement, la forme des moyens d'absorption de chocs et/ou leur mode de réalisation et/ou d'assemblage est tel qu'ils peuvent être utilisés comme support pour des composants.

Le réservoir de l'invention peut être mis en œuvre dans un système de dépollution ou de stockage d'énergie monté à bord d'un véhicule à moteur. Généralement, un tel système comprend des composants actifs et/ou des composants hydrauliques, tel que par exemple un manifold (ensemble de conduits servant à diriger des fluides vers des points déterminés).

Dans un mode de réalisation avantageux, le manifold peut être logé (ou formé) dans les moyens d'absorption de chocs.

Dans un autre mode de réalisation avantageux, le réservoir de l'invention comprend un ensemble d'alvéoles et un réseau de canalisations assurant la communication entre elles. Ce réseau de canalisations peut être logé (ou formé) dans les moyens d'absorption de chocs.

Des renforts sous forme de nervures ou d'inserts peuvent être ajoutés afin d'améliorer la tenue en pression et la résistance mécanique des alvéoles. De tels renforts sont moulés dans les moyens d'absorption de chocs.

Par exemple, des tissus de fibre de verre ou de carbone ou des treillis métalliques peuvent être logés à l'intérieur des moyens d'absorption de chocs.

Le réservoir de l'invention comprend un ou plusieurs élément(s) chauffant(s). Il peut également comprendre des matériaux à changement de phase (MCP). En particulier, on peut utiliser des fils chauffants, des thermistances de type PTC (positive temperature coefficient) ou des chauffeurs flexibles connus pour chauffer le composé contenu dans chaque alvéole.

L'usage d'éléments chauffants (et/ou de refroidissement) ou de matériaux à changement de phase permet de stabiliser la température du réactif contenu dans l'alvéole et d'assurer ainsi une production stable d'ammoniac. De plus, l'utilisation de chauffe différenciée entre alvéoles et/ou de quantités relatives différentes de matériaux à changement de phase entre alvéoles permet d'appauvrir ou d'enrichir certaines alvéoles en ammoniac; par exemple, lors d'un arrêt du système (suite par exemple à un arrêt du véhicule), la charge en ammoniac dans les alvéoles refroidissant plus vite (contenant par exemple peu ou pas de matériau à changement de phase) augmentera au détriment des alvéoles refroidissant plus lentement (contenant par exemple beaucoup de matériau à changement de phase). Ceci peut être particulièrement intéressant pour assurer une mise à disposition rapide d'ammoniac après un arrêt du véhicule, par exemple en activant à ce moment préférentiellement les alvéoles riches en ammoniac.

Par exemple, le ou les élément(s) chauffant(s) peuvent être placés à l'extérieur de l'alvéole.

En surmoulant une couche protectrice en matière plastique (formant les moyens d'absorption de chocs) par-dessus l'alvéole, la couche protectrice plaque et maintient fermement (après retrait) les éléments chauffants contre l'alvéole. Ainsi, cet assemblage permet d'assurer un contact permanent entre les éléments chauffants et l'alvéole, et donc d'améliorer l'échange thermique entre les éléments chauffants et le composé stocké dans l'alvéole. La couche protectrice en matière plastique (formant les moyens d'absorption de chocs) permet également d'isoler thermiquement l'alvéole et les éléments chauffants de l'extérieur.

Avantageusement, les moyens d'absorption de chocs comprennent des moyens de fixation permettant le montage du réservoir de l'invention sur le véhicule.

Les moyens de fixation peuvent avoir une forme quelconque.

Dans un mode de réalisation particulier, les moyens d'absorption de chocs comprennent des surplus de matière plastique formant des pattes de fixation. Ces pattes de fixation peuvent être configurées pour venir s'engager dans des logements formés sur le véhicule, puis être assemblées par tout moyen connu, tel que par serrage par exemple.

Dans un mode de réalisation particulier, les moyens d'absorption de chocs comprennent des surplus de matière plastique formant des pattes de fixation. Ces pattes de fixation sont assemblées sur le véhicule par tout moyen connu, tel que par exemple vissage, clipsage.

L'alvéole est constituée ou comprend au moins une partie grillagée métallique. Grâce à ces parties grillagées, l'alvéole peut avoir des formes sophistiquées. En effet, les parties grillagées peuvent être pliées ou courbées. La forme de l'alvéole peut donc facilement être adaptée à son environnement sur un véhicule.

Cette grille peut être obtenue par découpe ou perçage de structures métalliques continues. Les trous ainsi obtenus peuvent permettre d'assembler ces structures métalliques avant surmoulage.

Les parties grillagées peuvent être également obtenues par tout autre moyen, tel que par exemple entrecroisement de fils. Ces éléments peuvent également être pré-assemblés ou non avant surmoulage.

En surmoulant une couche protectrice en matière plastique (formant les moyens d'absorption de chocs) par-dessus l'alvéole, la matière plastique pénètre avantageusement dans les parties grillagées de manière à les rendre étanche. Cet assemblage permet donc d'assurer à la fois la tenue à la pression, l'étanchéité et l'absorption des chocs.

Dans un mode de réalisation particulier, la quasi-totalité ou même la totalité de l'alvéole peut être réalisée en grillage métallique et/ou plastique. Ceci permet de réduire davantage le poids de l'alvéole, et donc du réservoir.

### LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre schématiquement un réservoir selon un premier mode de réalisation qui ne correspond pas à l'invention ;
- la figure 2 illustre schématiquement un réservoir selon un deuxième mode de réalisation qui ne correspond pas à l'invention ;
- la figure 3 illustre schématiquement un réservoir selon un troisième mode de réalisation qui ne correspond pas à l'invention ;
- la figure 4 illustre schématiquement un réservoir selon un quatrième mode de réalisation qui ne correspond pas à l'invention ;
- la figure 5 illustre schématiquement un réservoir selon un cinquième mode de réalisation qui ne correspond pas à l'invention ;
- la figure 6 illustre schématiquement un réservoir selon un sixième mode de réalisation qui ne correspond pas à l'invention ;
- la figure 7 illustre schématiquement un réservoir selon un septième mode de réalisation qui ne correspond pas à l'invention ; et
- la figure 8 illustre schématiquement un réservoir selon un huitième mode de réalisation qui ne correspond pas à l'invention.

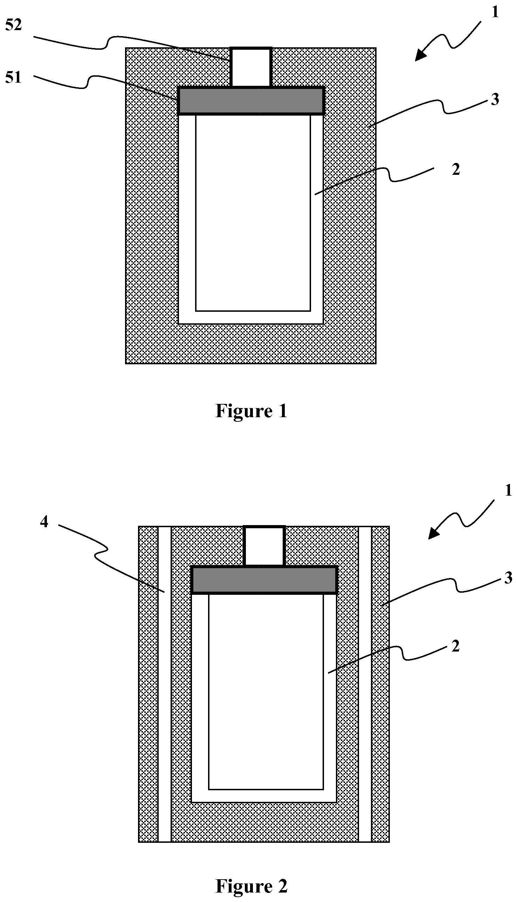

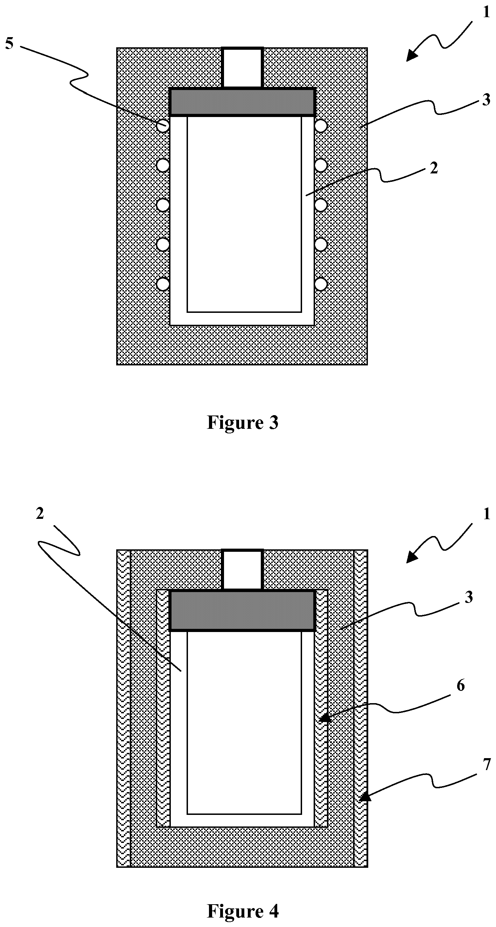

L'invention revendiquée dans la revendication 1 correspond à une combinaison des modes de réalisation des Figures 2 et 3, avec en plus des moyens de renfort.

### DESCRIPTION DETAILLEE

Dans les figures 1 à 8, des numéros identiques désignent des éléments identiques.

Ci-dessous, on décrit en relation avec les figures 1 à 8 des exemples de réalisation où le gaz stocké par sorption sur le composé est l'ammoniac. Bien entendu, dans une variante de réalisation le gaz peut être de tout autre type, et notamment de l'hydrogène. En outre, on décrit en relation avec les figures 1 à 8 des exemples de réalisation où le réservoir comprend une alvéole qui peut être en composite (par exemple en polyphtalamide chargé en fibres de verre), en métal ou en plastique mono ou multi couches. Bien entendu, dans une variante de réalisation l'alvéole peut être en tout autre type de matériau.

La figure 1 illustre schématiquement un réservoir selon un premier mode de réalisation qui ne correspond pas à l'invention.

Le réservoir 1 comprend une alvéole 2. Dans l'exemple illustré, l'alvéole 2 a une forme cylindrique. Cette forme cylindrique est obtenue, par exemple, par un procédé d'estampage, d'emboutissage ou de forgeage à chaud ou à froid. Dans une variante de réalisation, cette forme cylindrique est obtenue par un procédé d'emboutissage à chaud ou froid d'extrusion. Bien entendu, dans un autre mode de réalisation l'alvéole 2 peut avoir une autre forme.

Un couvercle 51 de forme quelconque est fixé au-dessus de l'alvéole 2. Le couvercle 51 est assemblé de manière étanche sur l'alvéole 2. Par exemple, dans le cas particulier d'une alvéole métallique, l'assemblage entre le couvercle et l'alvéole peut être réalisé notamment mais pas exclusivement par soudure à l'arc, soudure laser, TIG (Tungsten Inert gas) ou MIG (Metal Inert gas). Avantageusement, le couvercle présente au moins un orifice 52 permettant le remplissage d'ammoniac, à partir d'une bonbonne par exemple. Dans un mode de réalisation particulier, le couvercle peut comprendre des éléments de sécurité, des éléments de ventilation, des éléments de mesure, ou encore des éléments de renfort. Par exemple, le couvercle 51 peut comprendre une valve de sécurité, un capteur de pression et un filtre. Ainsi, il est possible d'obtenir un réservoir compact et intelligent (c'est-à-dire avec des fonctions intégrées, par exemple, dans le couvercle).

L'alvéole 2 est dimensionnée de manière à ce qu'un composé (non représenté) puisse y être introduit et stocké. Le composé est par exemple un solide (et de préférence un sel). L'ammoniac est stocké par sorption sur le composé. Lorsqu'on chauffe le composé, on libère de l'ammoniac. L'ammoniac ainsi libéré sort de l'alvéole via, par exemple, l'orifice 52.

Le réservoir 1 comprend une couche protectrice 3 en matière plastique (par exemple) qui est surmoulée par-dessus l'alvéole 2. La couche protectrice 3 forme des moyens d'absorption de chocs permettant d'absorber l'énergie cinétique d'un choc. C'est la déformation plastique de la couche protectrice 3 qui absorbe l'énergie du choc.

Grâce à la présence de cette couche protectrice 3, l'épaisseur de la paroi de l'alvéole 2 peut être relativement faible. Dans le cas particulier d'une alvéole métallique, l'épaisseur de l'alvéole peut être d'environ 0.4mm et l'épaisseur de la couche protectrice 3 peut être d'environ 2mm.

La figure 2 illustre une variante de réalisation du réservoir 1 décrit ci-dessus en relation avec la figure 1. Dans cette variante, la couche protectrice 3 comprend des éléments de renfort 4. Par exemple, des inserts en fibre de verre donnent de bons résultats. Dans l'exemple de la figure 2, les éléments de renfort 4 sont moulés dans la couche protectrice 3. L'utilisation de ces éléments de renfort 4 permet avantageusement d'augmenter la résistance à l'impact ainsi que la tenue à la pression du réservoir.

La figure 3 illustre une variante de réalisation du réservoir 1 décrit ci-dessus en relation avec la figure 1. Dans cette variante, le réservoir 1 comprend un élément chauffant 5 tel que, par exemple, des fils chauffants ou un chauffeur flexible. L'élément chauffant 5 est commandé (activé/désactivé) par une unité de contrôle embarquée sur le véhicule (par exemple, l'ECU du véhicule) pour chauffer le composé contenu dans l'alvéole 2. Dans un exemple de réalisation, l'assemblage du réservoir 1 peut s'effectuer de la manière suivante : on enroule l'élément chauffant 5 autour de la paroi externe de l'alvéole 2, puis on surmoule la couche protectrice 3 par-dessus l'ensemble. De cette façon, la couche protectrice 3 permet de maintenir en contact l'élément chauffant 5 contre l'alvéole 2. La couche protectrice 3 permet également d'isoler thermiquement l'alvéole 2 et l'élément chauffant 5 de l'extérieur. Ainsi, le réservoir dispose d'une meilleure chauffe.

La figure 4 illustre une variante de réalisation du réservoir 1 décrit ci-dessus en relation avec la figure 1. Dans cette variante, le réservoir 1 comprend des structures auxétiques 6 et 7. Ces structures auxétiques 6 et 7 peuvent, par exemple, être réalisées dans un matériau thermoplastique identique ou différent de celui de la couche protectrice 3. Les structures auxétiques 6 et 7 permettent d'augmenter la tenue à l'impact du réservoir 1.

Dans un exemple de réalisation, l'assemblage du réservoir 1 peut s'effectuer par une ou plusieurs opérations de surmoulage consécutives : on surmoule une première structure auxétique 6 par-dessus l'alvéole 2, ensuite on surmoule une couche intermédiaire en thermoplastique 3, et éventuellement une nouvelle structure auxétique par-dessus la couche protectrice 3.

Dans un autre exemple de réalisation, l'assemblage du réservoir 1 peut s'effectuer en une seule étape de surmoulage. En d'autres termes, la couche protectrice 3 et la structure auxétique externe (7) peut être réalisée en une seule fois. Un tel assemblage est donc rapide et économique.

Encore dans un autre exemple de réalisation, les structures auxétiques 6 et 7 peuvent être insérées dans la couche protectrice 3.

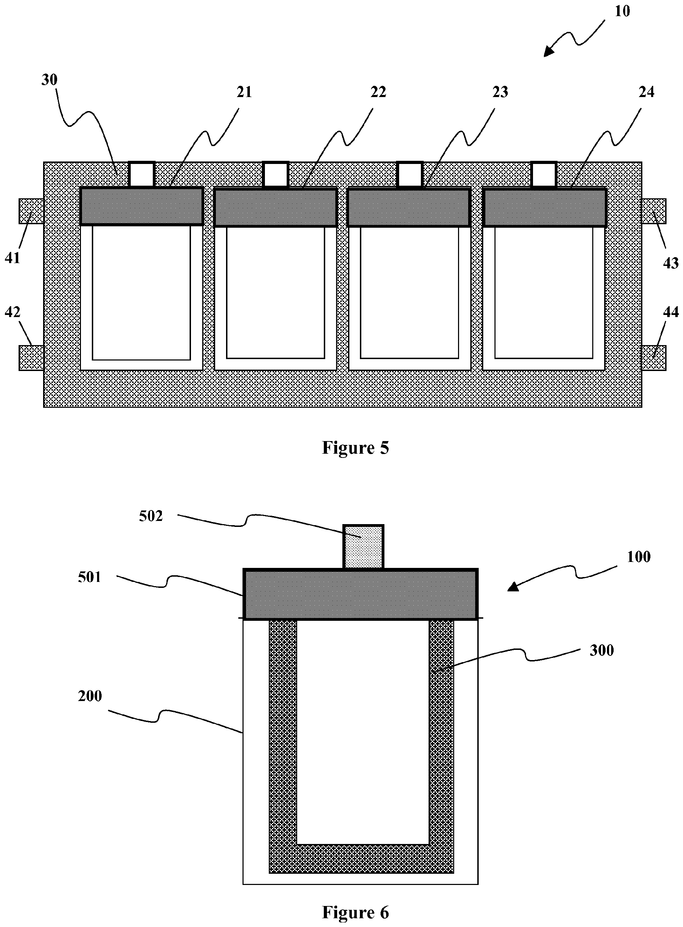

La figure 5 illustre schématiquement un réservoir selon un cinquième mode de réalisation particulier de l'invention.

Le réservoir 10 comprend un groupe d'alvéoles 21, 22, 23 et 24. De préférence, les alvéoles 21, 22, 23 et 24 sont identiques. Bien entendu, dans un mode de réalisation particulier elles peuvent avoir des formes différentes et/ou des volumes de stockage différents. Chacune des alvéoles 21, 22, 23 et 24 contient un composé stockant par sorption de l'ammoniac par exemple. Le réservoir 10 comprend une couche protectrice 30 en matière plastique (par exemple) qui est surmoulée par-dessus le groupe d'alvéoles 21, 22, 23 et 24. La couche protectrice 30 forme des moyens d'absorption de chocs permettant d'absorber l'énergie cinétique d'un choc. Dans l'exemple illustré sur la figure 5, la couche protectrice 30 comprend des pattes de fixation 41, 42, 43 et 44. Par exemple, ces pattes de fixation 41, 42, 43 et 44 peuvent être formées lors de l'étape de surmoulage de la couche protectrice 30 par-dessus le groupe d'alvéoles. Ces pattes de fixation 41, 42, 43 et 44 permettent un montage aisé et précis du réservoir 10 sur le véhicule.

La figure 6 illustre schématiquement un réservoir selon un sixième mode de réalisation particulier de l'invention.

Le réservoir 100 comprend une alvéole 200. Un couvercle 501 de forme quelconque est fixé au-dessus de l'alvéole 200. Le couvercle 501 présente un orifice 502, via lequel l'alvéole 200 communique avec l'extérieur.

Dans l'exemple illustré sur la figure 6, le réservoir 100 comprend une couche protectrice 300 en matière plastique (par exemple) qui est surmoulée à l'intérieur de l'alvéole 200.

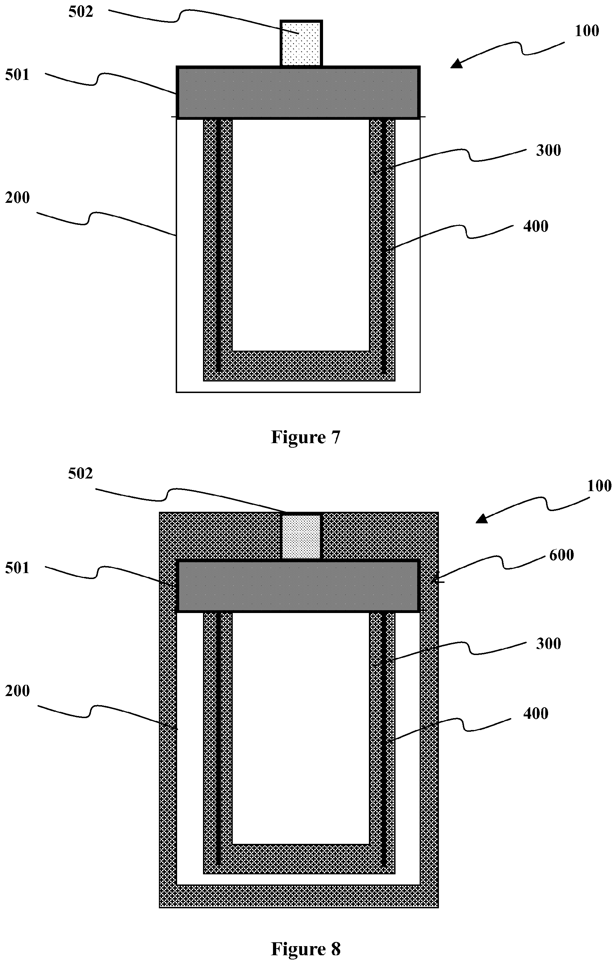

La figure 7 illustre une variante de réalisation du réservoir 100 décrit ci-dessus en relation avec la figure 6. Dans cette variante, la couche protectrice interne 300 comprend des éléments métalliques de chauffe 400. Ces éléments métalliques 400 sont par exemple assemblés par surmoulage. Le surmoulage permet avantageusement d'assurer des liaisons étanches entre ces éléments métalliques.

La figure 8 illustre une variante de réalisation du réservoir 100 décrit ci-dessus en relation avec la figure 7. Dans cette variante, le réservoir 100 comprend une couche protectrice interne 300 en matière plastique (par exemple) qui est surmoulée à l'intérieur de l'alvéole 200 et une couche protectrice externe 600 en matière plastique (par exemple) qui est surmoulée par-dessus l'alvéole 200.

## Revendications

1. Réservoir (1) pour le stockage d'un gaz stocké par sorption sur un composé, le réservoir (1) comprenant au moins un composé apte à stocker du gaz par sorption, au moins un élément chauffant et au moins une alvéole (2) apte à contenir le composé, **caractérisé en ce que** ladite au moins une alvéole (2) comprend des moyens d'absorption de chocs (3) qui sont assemblés sur la surface externe de l'alvéole (2) par surmoulage, les moyens d'absorption de chocs étant au moins en partie réalisés dans un matériau polymère thermoplastique, le réservoir comprenant en outre au moins un élément de renfort (4) moulé dans les moyens d'absorption de chocs, les moyens d'absorption de chocs maintenant en contact l'élément chauffant contre ladite au moins une alvéole, ladite au moins une alvéole comprenant une partie grillagée métallique.

2. Réservoir selon la revendication 1, **caractérisé en ce que** les moyens d'absorption de chocs sont réalisés en polyéthylène.

3. Réservoir selon la revendication 1, **caractérisé en ce que** les moyens d'absorption de chocs sont réalisés en polypropylène.

4. Système de dépollution ou de stockage d'énergie comprenant un réservoir (1) selon l'une quelconque des revendications 1 à 3, et un composant, les moyens d'absorption de chocs formant un support pour le composant.

5. Réservoir selon l'une quelconque des revendications 1 à 4, **caractérisé en ce que** les moyens d'absorption de chocs comprennent des moyens de fixation (41, 42, 43, 44) du réservoir.

## Patentansprüche

1. Tank zum Speichern eines Gases, das durch Sorption auf einer Verbindung gespeichert wird, wobei der Tank mindestens eine Verbindung umfasst, die zum Speichern von Gas durch Sorption konfiguriert ist, mindestens ein Heizelement und mindestens eine Zelle (2), die konfiguriert ist, um die Verbindung zu enthalten; **dadurch gekennzeichnet, dass** die mindestens eine Zelle (2) Stoßdämpfungsmittel (3) umfasst, die durch Formen auf der Außenfläche der Zelle (2) angeordnet sind, wobei das Stoßdämpfungsmittel zumindest teilweise aus einem thermoplastischen Polymermaterial besteht, das Reservoir, das ferner mindestens ein Verstärkungselement (4) umfasst, das in die Stoßabsorptionsmittel eingegossen ist, wobei die Stoßabsorptionsmittel das Heizelement gegen die mindestens eine Zelle in Kontakt halten, wobei die mindestens eine Zelle ein Metallgitterteil umfasst.

2. Tank nach Anspruch 1, wobei die Stoßdämpfungsmittel aus Polyethylen bestehen

3. Tank nach Anspruch 1, wobei die Stoßdämpfungsmittel aus Polypropylen bestehen

4. Verschmutzungsbekämpfungs- oder Energiespeichersystem, umfassend einen Tank nach einem der Ansprüche 1 bis 3 und eine Komponente und das Stoßdämpfungsmittel, das eine Stütze für die Komponente bildet.

5. Tank nach einem der Ansprüche 1 bis 4, **dadurch gekennzeichnet, dass** die Stoßdämpfungsmittel Befestigungsmittel (41, 42, 43, 44) des Tanks umfassen

## Claims

1. A tank for storing a gas that is stored by sorption onto a compound, the tank comprising at least one compound configured for storing gas by sorption, at least one heating element and at least one cell (2) configured to contain the compound; **characterized in that** said the least one cell (2) comprises shock absorbing means (3) which are assembled on the external surface of the cell (2) by molding,the shock absorbing means being at least partly made of a thermoplastic polymer material, the reservoir further comprising at least one reinforcing element (4) molded into the shock absorption means, the shock absorption means keeping in contact the heating element against said at least one cell, said at least one cell comprising a metallic mesh part.

2. The tank according to claim 1, wherein the shock absorbing means are made of polyethylene.

3. The tank according to claim 1, wherein the shock absorbing means are made of polypropylene.

4. A pollution control or energy storage system comprising a tank according to any of claims 1 to 3, and a component, and the shock absorbing means forming a support for the component.

5. The tank according to any of claims 1 to 4, **characterized in that** the shock absorbing means comprise fixing means (41, 42, 43, 44) of the tank.
